# EUROPEAN PATENT APPLICATION

(11) **EP 2 249 252 A1**
(43) Date of publication of application: **10.11.2010**
(21) Application number: 08871463.9
(22) Date of filing: 24.11.2008
(51) Int. Cl.: G06F 9/455, G06F 12/08

(54) **A RISC PROCESSOR DEVICE AND ITS INSTRUCTION ADDRESS CONVERSION LOOKING-UP METHOD**

(30) Priority: 21.01.2008 CN 200810056540
(71) Applicant: Institute of Computing Technology of the Chinese Academy of Sciences, Zhongguancun Haidian District Beijing 100190 (CN)
(72) Inventor: SU, Menghao, Beijing 100190 (CN); HU, Weiwu, Beijing 100190 (CN)
(74) Representative: Stöckeler, Ferdinand
(86) International application number: PCT/CN2008/001907
(87) International publication number: WO 2009/092180

(57) **Abstract**

An RISC processor and a method for converting and looking-up instruction address in the RISC processor. The device comprises a decoder, which includes a look-up table module for realizing the conversion from an X86 source instruction address to an MIPS target instruction address by using a look-up table. The look-up table module includes: a looking-up sub-module for indexing the look-up table based on content, wherein if looking-up is hit, the corresponding content will be stored in a target register, and if not, an entry address of the not-hit service program will be stored in the target register; and an indexing sub-module for indexing the look-up table based on content and getting an index of the table entry in which the content resides.

## Description

### FIELD OF THE INVENTION

The present invention relates to a technical field of computer processors, and in particular, to a reduced instruction set computing (RISC) processor and a method for converting and looking-up instruction address therein.

### BACKGROUND OF THE INVENTION

Virtual machine is a concept put forward and put into practice by IBM Corporation in the 60's of the 20^{th} century, when mainframes were the mainstream computers. A mainframe was divided into multiple virtual machines and virtual machine monitors (VMMs) were used for compartmentation so that a variety of applications or a plurality of users could share this scarce resource.

However, with the reduction of cost in hardware and the enhancement of computing capabilities as well as the emergence of a multi-task operating system (OS), VMMs gradually step down from the stage of history, while microcomputers and personal computers (PCs) are becoming increasingly popular.

Nevertheless, as virtual machines are powerful and successful in that users may access and use those functions and equipment that can be formed simply through a combination of instruction sets. In recent years, virtual machine monitors have once again become a focus in the academic circle and industry circle. Virtual machine monitors provide a virtual solution for the limitation of the modem computer system architecture, making it a powerful tool which will greatly enhance the capacity of modem computer systems.

Today's complex instruction set computing (CISC) processor, especially the X86 processor architecture, holds a dominant position in many applications, i.e., the X86 architecture is used in many large-sized server-based service applications. In order to enable service applications to be widely run on a reduced instruction set computing (RISC) processor, it has been a necessary task to realize its compatibility with an X86 processor. In addition, in the existing X86 processor-based computers, the applications are more diverse and plenty of commercial software is based on the X86 architecture. So, in order to run a wider range of diverse applications on a RISC microprocessor, it's also very urgent to realize the compatibility of the RISC microprocessor with X86.

As a major branch of RISC processors, the MIPS instruction set-based RISC processor currently has many open-source virtual machine platforms capable of realizing a heterogeneous support from the MIPS instruction set-based RISC processor to an X86 processor.

There are a variety of virtual machines, the key of which is a translating or interpreting process, namely, a process of translating or interpreting a target code into or as a local code that may be executed on a local machine. During the execution of a local code, in the case of executing a jump instruction, a virtual machine needs to convert an instruction address of an X86 source program into an instruction address of a corresponding MIPS target program, and then realize the jump according to the instruction address of the target program. In the prior art, a virtual machine completes the mapping from a source address to a target address by means of a hash table, and about 20 machine instructions are needed to complete every looking-up.

The looking-up process in the prior art has a significant influence on the performance of the virtual machine, whereby people's requirements of the performance of the virtual machine are hard to satisfy.

### SUMMARY OF THE INVENTION

The problem to be solved by the present invention is to provide an RISC processor device and a method for converting and looking-up instruction address therein, which accelerates the conversion from an X86 source instruction address to an MIPS target instruction address in an X86 virtual machine of an RISC processor, thereby improving the performance of the virtual machine.

The RISC processor provided for carrying out the present invention comprises a decoder, which includes a look-up table module for realizing the conversion from an X86 source instruction address to an MIPS target instruction address by using a look-up table.

The look-up table module includes a looking-up sub-module and an indexing sub-module, wherein
the looking-up sub-module is adapted for indexing the look-up table based on content, wherein if a table entry is hit, the corresponding content will be stored in a target register, and if not, an entry address of the not-hit service program will be stored in the target register, and
the indexing sub-module is adapted for indexing the look-up table based on content and getting an index of the table item in which the content resides.

The look-up table module further includes a filling-in sub-module adapted for filling in the look-up table based on an index of a table entry of the look-up table.

The look-up table module further includes a reading sub-module adapted for reading the content of the look-up table based on an index of a table entry of the look-up table.

The look-up table is a content addressable look-up table and realized by using a content addressable memory or a random access memory.

The look-up table includes 3 domains, namely, Domain ASID, Domain SPC and Domain TPC, wherein
Domain ASID is adapted for storing the ID numbers for initiating a plurality of processes of an X86 virtual machine on an operating system,
Domain SPC is adapted for storing X86 source instruction addresses, and
Domain TPC is adapted for storing MIPS target instruction addresses.

The entry address of the not-hit service program is a default value provided by the virtual machine, which value is stored either in CAM.default of a CPO register or in Item No. 0 of the look-up table.

To achieve the object of the present invention, a method for converting and looking-up instruction address in an RISC processor is provided. The RISC processor comprises a decoder which includes a look-up table module for realizing the conversion from an X86 source instruction address to an MIPS target instruction address by using a look-up table. The method comprises the following steps:
Step A: when an X86 virtual machine of the RISC processor starts up, initializing the look-up table and filling in the look-up table using the content of the obtained instruction address of the X86 virtual machine to the MIPS instruction address; and
Step B: accessing the look-up table to complete the conversion from the X86 source instruction address to the target instruction address while executing a jump instruction in the X86 virtual machine of the RISC processor.

The Step B includes the following steps:
Step B1: using a CAMPV instruction for querying a table entry value of the look-up table to search the look-up table according to the source instruction address in the register to thereby obtain the target instruction address;
Step B2: if the target instruction address is hit, storing the value of the directly obtained target instruction address in a target register and jumping by using the jump instruction to the code segment pointed by the target address to continue the execution; and
Step B3: if the target instruction address is not hit, storing the obtained address of the not-hit service program, which address is provided by the virtual machine, in the target register and jumping to the not-hit service program to continue the execution.

The following step is further included after the Step B3:
Step C: the not-hit service program refilling in the look-up table based on the content of a hash table maintained by the virtual machine.

The Step C includes the following steps:
Step C1: using a CAMPI instruction for querying an index of a table entry of the look-up table to obtain an index of the table entry in which a value of the source instruction address resides, and storing the index in the target register; and
Step C2: using a CAMWI instruction for filling in a look-up table based on an index of a table entry of the look-up table to fill in the table with an ASID of a progress, a source instruction address and a corresponding target instruction address based on a value of the index in the target register.

The following step is further included after the Step C2:
Step D: invalidating one item of content in the look-up table, or reading the content of the look-up table RAM based on an index of a table entry of the look-up table.

### BRIEF DESCRIPTION OF THE DRAWINGS

FIG. 1 is a schematic diagram of the decoder of the RISC processor device according to the present invention;
FIG. 2 is an illustrative graph of realizing the CAMPV instruction according to the present invention; and
FIG. 3 is a flow chart of the instruction-address conversion looking-up method for an RISC processor according to the present invention.

### THE BEST WAY TO CARRY OUT THE PRESENT INVENTION

In order to make the object, technical solution and advantages of the present invention more clear, an RISC processor device and a method for converting and looking-up instruction address therein according to the present invention are further explained in detail with reference to the accompanying drawings and examples. It should be understood that the embodiments described here are used only to explain this invention, rather than define it.

The present invention is described by taking a MIPS64 instruction set-based RISC processor device as an example in the embodiments of the present invention. However, it should be noted that the present invention is not limited to the MIPS64 instruction set-based RISC processor device and can be applied to the RISC processors which are based on the other instruction set.

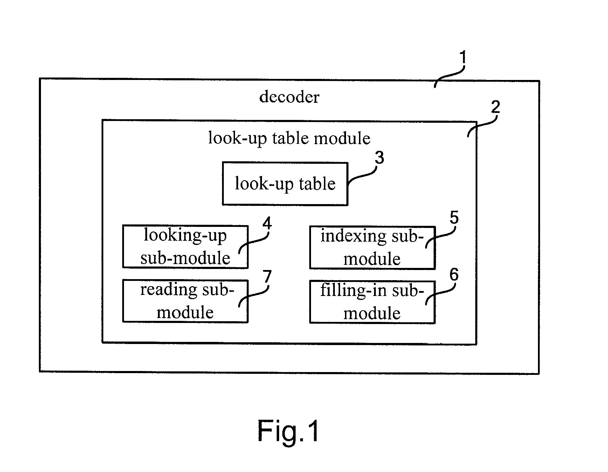

As shown in FIG 1, the RISC processor device in the examples of the present invention comprises a decoder 1, which includes a look-up table module 2 for realizing the conversion from an X86 source instruction address to an MIPS target instruction address by using a look-up table 3.

In the present invention, a look-up table 3 is supported as hardware, which quickly looks up the translations from jump addresses in an X86 program to MIPS jump addresses, thereby improving the performance of the virtual machine.

As an embodiment, the look-up table 3 may be a content addressable look-up table and realized by using a content-addressable memory (CAM) or a random access memory (RAM). For an RAM, if an address is input, data corresponding to the address will be output; for a CAM, if some content is input, an index number of a unit storing said content or the content of another unit associated with said index number will be output.

The look-up table 3 may be a content addressable look-up table for realizing the translation from an X86 jump address to an MIPS jump address, namely, realizing the convention from an X86 source instruction address to an MIPS target instruction address in an X86 virtual machine of an RISC processor. The table entries are shown in Table 1.

**Table 1 Table Entries in the Look-up Table**

| | | |
|---|---|---|
| ASID | SPC | TPC |

As described in Table 1, three domains, namely, Domain ASID, Domain SPC and Domain TPC, are used in the convention from the X86 source instruction address (SPC) to the MIPS target instruction address (TPC).

Wherein, Domain ASID is adapted for storing the ID numbers for initiating a plurality of processes of an X86 virtual machine on an operating system. When all these processes of the X86 virtual machine need to use the look-up table 3, the ID numbers (ASIDs) assigned to them by the operating system are used to differentiate them from one another so as to prevent interference from others.

Domain SPC is adapted for storing X86 source instruction addresses.

Domain TPC is adapted for storing MIPS target instruction addresses.

When the look-up table module 2 is looking up, the current ASIDs of the processes of the X86 virtual machine together with the SPC provided by the look-up table form an "address" portion of the CAM, which portion is sent to all the table entries. Every table entry compares the ASIDs and SPCs stored therein with the input ones, and outputs the TPCs stored therein once they match. Thus, for a process in the X86 virtual machine of the RISC processor, as long as an X86 source instruction address it intends to look up is input, a corresponding MIPS target instruction address will be looked up from the look-up table 3.

Wherein, the values of the Domain SPC and the Domain TPC in the look-up table 3 are initialized during the initialization of the virtual machine, while the value of the Domain ASID is provided by the local operating system.

Preferably, as shown in FIG. 1, the look-up table module 2 includes a looking-up sub-module 4, an indexing sub-module 5, a filling-in sub-module 6 and a reading sub-module 7.

The looking-up sub-module 4 is adapted for indexing the look-up table 3 based on content, wherein if a table entry is hit, the corresponding content will be stored in a target register, and if not, an entry address of the not-hit service program will be stored in the target register.

The indexing sub-module 5 is adapted for indexing the look-up table 3 based on content and getting an index of the table item in which the content resides.

The indexing sub-module 5 indexes the look-up table 3 based on the content of a general register, wherein if a table entry is hit, an index of the corresponding table entry will be stored in a target register, and if not, the most significant bit in the target register will be set to 1.

The filling-in sub-module 6 is adapted for filling in the look-up table based on an index of a table entry of the look-up table 3.

The filling-in sub-module 6 fills in the table entries of the look-up table (CAM and RAM) 3, respectively, with the values in the general register based on an index value in the general register.

The reading sub-module 7 is adapted for reading the content of a table entry of the look-up table 3 based on an index of a table entry of the look-up table 3.

The reading sub-module 7 reads the content of the look-up table 3 based on an index value in the general register and stores the content in the target register.

As an embodiment, the looking-up sub-module 4, the indexing sub-module 5, the filling-in sub-module 6 and the reading sub-module 7 are realized via four instructions that access or modify the structure of the look-up table in the examples of the present invention.

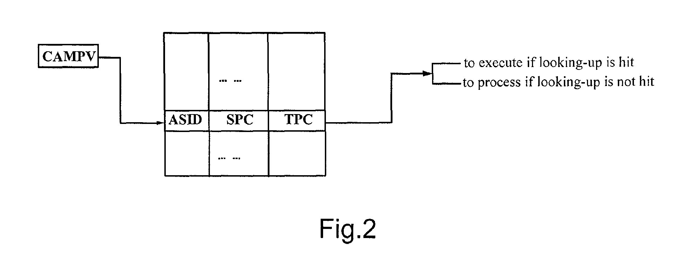

Instruction 1: CAMPV instruction. As shown in FIG. 2, said instruction is adapted for querying the value of the table entry of the look-up table RAM.

The format of said instruction is as follows:

| | | |
|---|---|---|
| CAMPV | rd, | rs |

The look-up table is indexed based on the content of a general register GPR[rs] to get the content in the RAM. If a table entry is hit, the corresponding content in the RAM will be stored in a target register GPR[rd]; if not, an entry address of the not-hit service program will be stored in the target register GPR[rd].

The process of executing the instruction means the entire flow that the processor executes the instruction, including value fetching, decoding, execution and so on. The part accessed by the instruction is the above-mentioned CAM look-up table.

Instruction 2: CAMPI instruction. Said instruction is adapted for querying an index of the table entry of the look-up table RAM.

The format of said instruction is as follows:

| | | |
|---|---|---|
| CAMPI | rd, | rs |

The look-up table is indexed based on the content of a general register GPR[rs] to get the index of the table entry in which the content resides. If a table entry is hit, the index of the corresponding table entry will be stored in a target register GPR[rd]; if not, the most significant bit in the target register GPR[rd] will be set to 1.

The process of executing the instruction means the entire flow that the processor executes the instruction, including fetching, decoding, execution and so on. The part accessed by the instruction is the above-mentioned CAM look-up table.

Instruction 3: CAMWI instruction. Said instruction is adapted for filling in the look-up table according to the index of the table entry of the look-up table RAM. The format of said instruction is as follows:

| | | | |
|---|---|---|---|
| CAMWI | rd, | rs, | rt |

The look-up table is filled in based on the value of a GPR[rd]. The table entries of the look-up table (CAM and RAM) are filled in with the values of the registers GPR[rs] and GPR[rt], respectively, based on the index values in the general register GPR[rd].

If the index values go beyond the range of the table entries of the look-up table, an address error exception will be caused.

The process of executing the instruction means the entire flow that the processor executes the instruction, including fetching, decoding, execution and so on. The part accessed by the instruction is the above-mentioned look-up table CAM.

Instruction 4: RAMRI instruction. Said instruction is adapted for reading the content of the table entry of the look-up RAM table according to the index of the table entry of the look-up table RAM.

The format of said instruction is as follows:

| | | |
|---|---|---|
| RAMRI | rd, | rs |

The content of the look-up table RAM is read based on the value of a GPR[rs]. The content of the look-up table RAM is read based on the index value in a general register GPR[rs], and is stored in a target register GPR[rd].

If the index values go beyond the range of the table entries of the look-up table, an address error exception will be caused.

Hereinafter, the corresponding processing in the case that looking-up is not successful, namely, the looking-up of the look-up table is not successful, in other words, there is no such pair of SPC-TPC expected by the corresponding process in the CAM, is described in detail.

When the looking-up is not successful, namely, a table entry is not hit, jumping to the entry address of the not-hit service program and being processed by the not-hit service program.

The not-hit service program is an existing routine, which is an existing standard technology of the MIPS instruction set-based RISC processor. So, it won't be described in details in the examples of the present invention.

As an embodiment, the entry address of the not-hit service program is stored in CAM.default of a CPO register. The virtual machine provides a default value which is stored in CAM.default of a CPO register as an entry address of the not-hit service program.

This is a control register of the processor. The control register uses a reading & writing manner the same as those of other control registers (the only difference lies in address), i.e., the virtual machine provides a default value as an entry address of the not-hit service program. When CAM executes looking-up while a table entry is not hit, the default value stored in the CAM.default is sent to the target register. So, in the case that a table entry is hit, the look-up table program may jump to the MIPS instruction address to continue the execution; in the case that a table entry is not hit, the program may jump to the entry address of the not-hit service program and then the look-up table will be filled in with a corresponding address found out by the not-hit service program. In this way, the addition of a transfer instruction that determines if a table entry is hit after looking-up may be avoided.

Because then the target address has been stored in the target register, a direct jump instruction in the existing MIPS64 is utilized to realize the jump.

Wherein, rs is the register in which the target address is stored.

As another embodiment, the entry address of the not-hit service program may be stored in the Item No. 0 of the table entries of the look-up table, instead of one control register in the Example 1.

A new instruction, VJR, is set in this method. As for the default, the content in the No. 31 general register is used as SPC looking-up. The function of the VJR instruction is similar to the function of the two instructions, CAMPV+JR, in the first method.

The format of said instruction is as follows:

| | |
|---|---|
| VJR | rt |

The content of the look-up table RAM is read based on the value of the No. 31 general register. The content (namely, the converted target address) of the look-up table RAM is read according to the value of the general register GPR[31].
If the looking-up is successful, the content will be stored in the target register GPR[rt). Then, the instruction jumps to the target address according to the value of the register rt; otherwise, the content of Item No. 0 of the look-up table RAM is stored in the target register GPR[rt]. The instruction jumps to the not-hit service program according to the value of the register rt.

The process of executing the instruction means the entire flow that the processor executes the instruction, including fetching, decoding, execution and so on. The part accessed by it is the above-mentioned CAM look-up table.

When a jump instruction using the source instruction address appears, the value of the source instruction address is stored in a fixed register (for example, the No. 31 register) by one instruction, e.g., the JMP rax instruction in the X86, prior to the jump instruction.

This is realized by means of two MIPS instructions:

| | |
|---|---|
| Addiu | $31, r2, 0x0 |
| VJR | r4 |

After decoding of the jump instruction and after the VJR instruction performs looking-up according to the value in the fixed register, if a table entry is hit, the jump instruction will directly jump to the code segment pointed by the target instruction address to continue the execution; and if not, the jump instruction will directly jump to Item No. 0 of the look-up table and then to the not-hit service program.

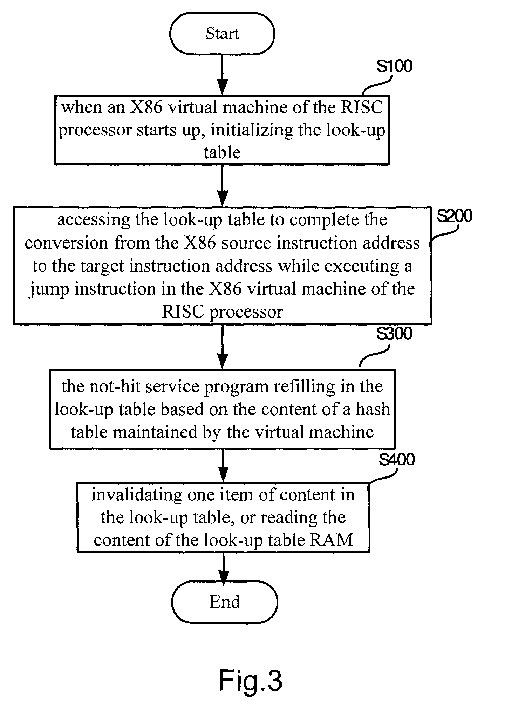

Next, a method for converting and looking-up instruction address in an RISC processor according to the present invention is described in detail. As shown in FIG 3, the method comprises the following steps:

Step S 100: when an X86 virtual machine of the RISC processor starts up, initializing the look-up table and filling in the look-up table using the content of the obtained instruction address of the X86 virtual machine to the MIPS instruction address;
during initialization of the X86 virtual machine in the RISC processor, the not-hit service program is utilized, and the look-up table obtaining the corresponding X86 instruction address to the MIPS instruction address is obtained through the initialization via the CAMPI instruction and the CAMWI instruction according to the content of the hash table maintained by the not-hit service program.

Step S200: accessing the look-up table to complete the conversion from the X86 source instruction address to the target instruction address while executing a jump instruction in the X86 virtual machine of the RISC processor; the Step S200 includes the following steps:
Step S210: using a CAMPV instruction for querying a table entry value of the look-up table to search the look-up table according to the source instruction address in the register to thereby obtain the target instruction address;
Step S220: if the looking-up is hit, storing the value of the directly obtained target instruction address in a target register and jumping by using the jump instruction to the code segment pointed by the target address to continue the execution; and
Step S230: if the looking-up is not hit, storing the obtained address of the not-hit service program, which address is provided by the virtual machine, in the target register and jumping to the not-hit service program to continue the execution.

Step S300: the not-hit service program refilling in the look-up table based on the content of a hash table maintained by the virtual machine;
the Step S300 includes the following steps:
Step S310: using a CAMPI instruction for querying an index of a table entry of the look-up table to obtain an index of the table entry in which a value of the source instruction address resides, and storing the index in the target register; and
Step S320: using a CAMWI instruction for filling in a look-up table based on an index of a table entry of the look-up table to fill in the table with an ASID of a progress, a source instruction address and a corresponding target instruction address based on a value of the index in the target register.

Preferably, the instruction-address conversion looking-up method for an RISC processor further includes the following step:
Step S400: invalidating one item of content in the look-up table, or reading the content of the look-up table RAM.

The CAMWI instruction for filling in the look-up table based on an index of the table entry of the look-up table RAM is used to fill in said entry having the pointed index with a fixed value, which can't match with the source instruction address of the program, that is, said entry is invalidated.

The RAMRI instruction for reading the content of the table entry of the look-up table RAM according to the index of the table entry of the look-up table RAM is used to read the value of the table entry having a pointed index of the look-up table RAM and store the value in a target register for convenience of debugging.

In the RISC processor device and the method for converting and looking-up instruction address in the RISC processor according to the present invention, a structure of the look-up table that can solve the mapping from an X86 source instruction address to an MIPS target instruction address is added to the RISC processor, and the conversion from the X86 source instruction address to the MIPS target instruction address in an X86 virtual machine of the RISC processor is accelerated, thereby improving the performance of the virtual machine.

In light of the drawings illustrating the embodiments of the present invention, other aspects and features of the present invention are obvious to those skilled in the art.

The embodiments of the present invention have been described and illustrated hereinabove. These embodiments should be considered illustrative only, and cannot be used to limit the present invention. The present invention should be interpreted based on the appended claims.

### INDUSTRIAL APPLICABILITY

In the RISC processor device and the method for converting and looking-up instruction address in the RISC processor according to the present invention, a structure of the look-up table that can solve the mapping from an X86 source instruction address to an MIPS target instruction address is added to the RISC processor, the look-up table module in the decoder utilizes the look-up table to realize the conversion from the X86 source instruction address to the MIPS target instruction address, and the conversion from the X86 source instruction address to the MIPS target instruction address in an X86 virtual machine of the RISC processor is accelerated, whereby the present invention can be applied to the improvement of the performance of a virtual machine.

## Claims

1. An RISC processor device comprising a decoder, **characterized in that** the decoder includes a look-up table module for realizing the conversion from an X86 source instruction address to an MIPS target instruction address by using a look-up table.

2. The RISC processor device according to claim 1, **characterized in that** the look-up table module includes a looking-up sub-module and an indexing sub-module, wherein
the looking-up sub-module is adapted for indexing the look-up table based on content, wherein if a table entry is hit, the corresponding content will be stored in a target register, and if not, an entry address of the not-hit service program will be stored in the target register, and
the indexing sub-module is adapted for indexing the look-up table based on content and getting an index of the table item in which the content resides.

3. The RISC processor device according to claim 2, **characterized in that** the look-up table module further includes a filling-in sub-module adapted for filling in the look-up table based on an index of a table entry of the look-up table.

4. The RISC processor device according to claim 3, **characterized in that** the look-up table module further includes a reading sub-module adapted for reading the content of the look-up table based on an index of a table entry of the look-up table.

5. The RISC processor device according to any one of claims 1 to 4, **characterized in that** the look-up table is a content addressable look-up table and realized by using a content addressable memory or a random access memory.

6. The RISC processor device according to claim 5, **characterized in that** the look-up table includes 3 domains, namely, Domain ASID, Domain SPC and Domain TPC, wherein
Domain ASID is adapted for storing the ID numbers for initiating a plurality of processes of an X86 virtual machine on an operating system,
Domain SPC is adapted for storing X86 source instruction addresses, and
Domain TPC is adapted for storing MIPS target instruction addresses.

7. The RISC processor device according to claim 2, **characterized in that** the entry address of the not-hit service program is a default value provided by the virtual machine, which value is stored either in CAM.default of a CPO register or in Item No. 0 of the look-up table.

8. A method for converting and looking-up instruction address in an RISC processor comprising a decoder which includes a look-up table module for realizing the conversion from an X86 source instruction address to an MIPS target instruction address by using a look-up table, **characterized in that** the method comprises the following steps:
Step A: when an X86 virtual machine of the RISC processor starts up, initializing the look-up table and filling in the look-up table using the content of the obtained instruction address of the X86 virtual machine to the MIPS instruction address; and
Step B: accessing the look-up table to complete the conversion from the X86 source instruction address to the target instruction address while executing a jump instruction in the X86 virtual machine of the RISC processor.

9. The method according to claim 8, **characterized in that** the Step B includes the following steps:
Step B1: using a CAMPV instruction for querying a table entry value of the look-up table to search the look-up table according to the source instruction address in the register to thereby obtain the target instruction address;
Step B2: if the looking-up is hit, storing the value of the directly obtained target instruction address in a target register and jumping by using the jump instruction to the code segment pointed by the target address to continue the execution; and
Step B3: if the looking-up is not hit, storing the obtained address of the not-hit service program, which address is provided by the virtual machine, in the target register and jumping to the not-hit service program to continue the execution.

10. The method according to claim 9, **characterized in that** the following step is further included after the Step B3:
Step C: the not-hit service program refilling in the look-up table based on the content of a hash table maintained by the virtual machine.

11. The method according to claim 10, **characterized in that** the Step C includes the following steps:
Step C1: using a CAMPI instruction for querying an index of a table entry of the look-up table to obtain an index of the table entry in which a value of the source instruction address resides, and storing the index in the target register; and
Step C2: using a CAMWI instruction for filling in a look-up table based on an index of a table entry of the look-up table to fill in the table with an ASID of a progress, a source instruction address and a corresponding target instruction address based on a value of the index in the target register.

12. The method according to claim 11, **characterized in that** the following step is further included after the Step C2:
Step D: invalidating one item of content in the look-up table, or reading the content of the look-up table RAM based on an index of a table entry of the look-up table.
